# EUROPEAN PATENT APPLICATION

(11) **EP 2 015 571 A2**
(43) Date of publication of application: **14.01.2009**
(21) Application number: 08157554.0
(22) Date of filing: 04.06.2008
(51) Int. Cl.: H04N 7/088

(54) **Teletext decoding device, television receiver device, video device, personal computer, and integrated circuit**

(30) Priority: 08.06.2007 JP 2007152802
(71) Applicant: Panasonic Corporation, Kadoma-shi Osaka 571-8501 (JP)
(72) Inventor: Shimazui, Atsushi, Osaka 540-6207 (JP); Inoue, Koichi, Osaka 540-6207 (JP)
(74) Representative: Grünecker, Kinkeldey, Stockmair & Schwanhäusser Anwaltssozietät

(57) **Abstract**

A displaying method memory (133) stores a multi-subpage displaying method table. The multi-subpage displaying method table indicates, station information, a page number, page information, a displaying method, and information indicating whether to enable or disable display for each page. A teletext display screen creating part (125) reads out decoded data of each page from a page information memory (132), and transmits image data to a display VRAM (134) so that teletext data is displayed in accordance with a displaying method corresponding to the station information and page number of the page in the multi-subpage displaying method table.

## Description

### BACKGROUND OF THE INVENTION

### 1. Field of the Invention

The present invention relates to a technique of decoding teletext data of a page having multiple subpages, and displaying a teletext image on a display device using multiple subpage displaying methods.

### 2. Description of the Related Art

Conventionally, a text broadcasting system called Teletext has been adopted in European and Asian countries that employ the PAL television signal system. Information to be transmitted is composed of a plurality of pages, and each page is identified by a page number.

Japanese Unexamined Patent Application Publication No. H05-199502 (paragraphs 0002 to 0007) describes a television receiver that has a function of automatically displaying, in a loop, multiple subpages that have the same page number and have different contents. This television receiver has a function of interrupting the automatic loop (automatic updating) in accordance with a user's instruction during displaying of a page.

Note that the following technique is known. If the capacity of a memory for storing teletext data is small (Level 1.5), teletext data is displayed when new page data is received. If the capacity of a memory for storing teletext data is large (Level 2.5), then when different subpages having the same page number are received (such as that described in Japanese Unexamined Patent Application Publication No. H05-199502), the individual subpages are separately stored and displayed.

### SUMMARY OF THE INVENTION

A page including multiple subpages that have the same page number and have different contents may be displayed by two displaying methods, such as displaying by automatic updating, displaying with automatic updating being interrupted. Of those displaying methods, a displaying method suitable for a page to be displayed varies depending on the contents of the page. However, in the conventional television receiver, a displaying method cannot be selected in advance before displaying, so that unnatural display may be performed by an inappropriate displaying method.

In view of the above-described problems, an object of the present invention is to use an appropriate displaying method to display a teletext image of a page having multiple subpages that have the same page number and have different contents.

To achieve the object, a first embodiment of the present invention provides a teletext decoding device for decoding teletext data and displaying a teletext image on a display device, including a displaying method memory which is indicating a relationship between a page attribute and a subpage displaying method, and a teletext data processing part, identifying a subpage displaying method corresponding to the attribute of the page with reference to the displaying method information which is stored in the displaying method memory, and causing the display device to display a teletext image of the page using said subpage displaying method.

In the first embodiment, the teletext data processing part causes the display device to display a teletext image using a subpage displaying method corresponding to the attribute of the page indicated by the displaying method information which is stored in the displaying method memory. Therefore, by storing, in the displaying method memory, the displaying method information indicating a relationship between the attribute of a page and a subpage displaying method suitable for the page, a teletext image can be displayed by an appropriate displaying method.

Also, according to a second embodiment of the present invention, in the teletext decoding device of the first embodiment, the teletext data processing part further has a function of causing the display device to display the displaying method information which is stored in the displaying method memory, and setting the displaying method information in accordance with a user's input.

In the second embodiment, the displaying method information is displayed on the display device, so that the user of the teletext decoding device can confirm that contents of the displaying method information have been switched. Also, the displaying method information is changed in accordance with a user's input, so that the user can select a subpage displaying method suitable for each page, and switch subpage displaying methods by input.

Also, according to a third embodiment of the present invention, in the teletext decoding device of the second embodiment, the teletext data processing part includes a multi-subpage extracting part for extracting a page having multiple subpages from the teletext data, and determining a subpage displaying method for the detected page, and a relationship between an attribute and a subpage displaying method detected by the multi-subpage extracting part is added to the displaying method information in the displaying method memory.

In the third embodiment, the displaying method memory stores displaying method information about a page having multiple subpages. Therefore, the displaying method information about a page having multiple subpages is displayed on the display device.

Also, according to a fourth embodiment of the present invention, in the teletext decoding device of the third embodiment, the attribute of the page includes station information and a page number for identifying the page.

Also, according to a fifth embodiment of the present invention, the teletext decoding device of the third embodiment further includes an extraction conditions memory for storing extraction conditions. The teletext data processing part further includes a multi-subpage comparing/extracting part for extracting, from the page detected by the multi-subpage extracting part, a page satisfying the extraction conditions stored in the extraction conditions memory, and a relationship between an attribute and a subpage displaying method of the page extracted by the multi-subpage comparing/extracting part is added to the displaying method information in the displaying method memory.

In the fifth embodiment, the displaying method memory stores displaying method information about a page satisfying extraction conditions which is stored in the extraction conditions memory. Therefore, it is possible to prevent an increase in information amount of the displaying method information displayed on the display device.

Also, according to a sixth embodiment of the present invention, in the teletext decoding device of the fifth embodiment, the attribute of the page includes station information, the multi-subpage extracting part extracts station information from the teletext data and stores into a station information memory with an internal number and an RF channel, and the teletext data processing part displays the station selection information stored in the station information memory, and displays the subpage displaying method of a page corresponding to station information designated by a user.

Also, according to a seventh embodiment of the present invention, in the teletext decoding device of the first embodiment, the teletext data processing part is formed of an integrated circuit, and the displaying method memory is formed of an external RAM provided outside the integrated circuit or a built-in RAM provided inside the integrated circuit.

### BRIEF DESCRIPTION OF THE DRAWINGS

FIG. **1** is a block diagram showing a configuration of a television receiver device according to Embodiment 1.
FIG. **2** is a diagram for describing a data format of packet 0 of a teletext signal in Embodiment 1.
FIG. **3** is a diagram for describing a multi-subpage displaying method of the television receiver device in Embodiment 1.
FIG. **4** is a diagram for describing contents of a multi-subpage displaying method table in Embodiment 1.
FIG. **5** is a flowchart showing an operation of a teletext display screen creating part **125** for creating image data of a page to be displayed in Embodiment 1.
FIG. **6** is a block diagram showing a configuration of a television receiver device according to Embodiment 2.
FIG. **7** is a flowchart showing an operation by a multi-subpage displaying method setting part **221** in Embodiment 2.
FIG. **8** is a diagram for describing an exemplary image displayed on a display device **110** in Embodiment 2.
FIG. **9** is a flowchart showing a detailed operation in (S2100) of the multi-subpage displaying method setting part **221** in Embodiment 2.
FIG. **10** is a flowchart showing a detailed operation in (S2200) of the multi-subpage displaying method setting part **221** in Embodiment 2.
FIG. **11** is a block diagram showing a configuration of a television receiver device according to Embodiment 3.
FIG. **12** is a flowchart showing an operation of a station information/multi-subpage extracting part **321** in Embodiment 3.
FIG. **13** is a flowchart showing a detailed operation in (S3100) of a station information/multi-subpage extracting part **321** in Embodiment 3.
FIG. **14** is a flowchart showing a detailed operation in (S3200) of the station information/multi-subpage extracting part **321** in Embodiment 3.
FIG. **15** is a block diagram showing a configuration of a television receiver device according to Embodiment 4.
FIG. **16** is a diagram for describing contents of a multi-subpage extraction conditions table in Embodiment 4.
FIG. **17** is a flowchart showing an operation of a multi-subpage comparing/extracting part **421** in Embodiment 4.
FIG. **18** is a block diagram showing a configuration of a television receiver device according to Embodiment 5.
FIG. **19** is a diagram for describing contents of a station information table in Embodiment 5.
FIG. **20** is a flowchart showing an operation of a station information/multi-subpage extracting part **521** in Embodiment 5.
FIG. **21** is a flowchart showing a detailed operation in (S5100) of the station information/multi-subpage extracting part **521** in Embodiment 5.
FIG. **22** is a diagram for describing an exemplary screen displayed by the television receiver devices of Embodiments 1 to 5.
FIG. **23** is a diagram for describing an exemplary screen displayed by the television receiver devices of Embodiments 1 to 5.

### DETAILED DESCRIPTION OF THE PREFERRED EMBODIMENTS

Hereinafter, embodiments of the present invention will be described with reference to the accompanying drawings. Note that like parts are indicated by like reference symbols throughout the specification and will not be repeatedly described.

### (Embodiment 1)

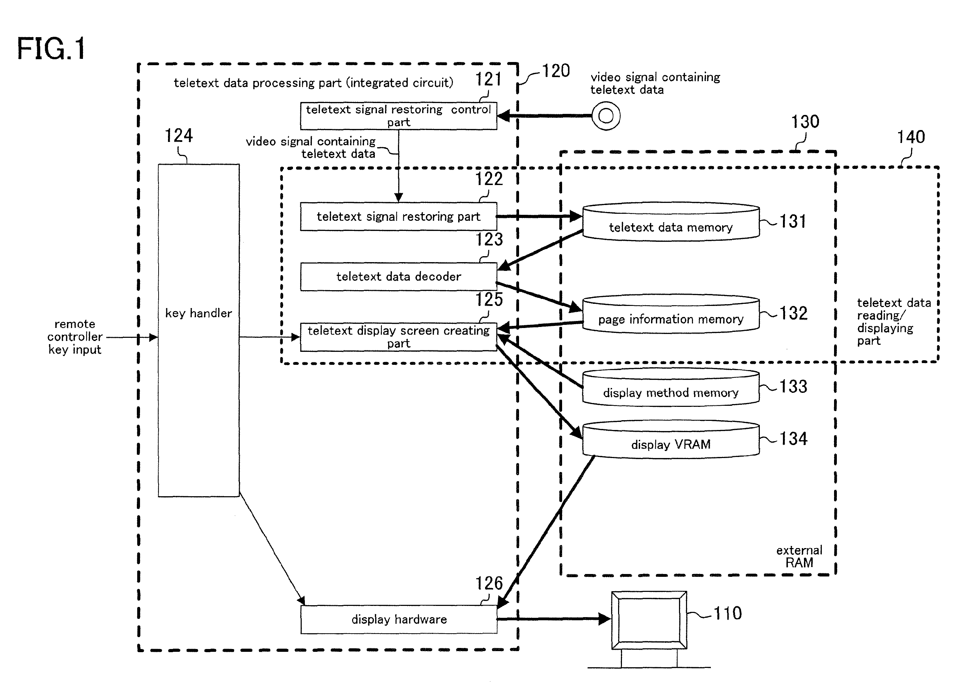

A television receiver device according to Embodiment 1 includes a display device **110,** a teletext data processing part (integrated circuit) **120,** and an external RAM (externally provided RAM) **130** as shown in FIG. **1****.**

The teletext data processing part **120** is formed of an integrated circuit.

The teletext data processing part **120** includes a teletext signal restoring control part **121,** a teletext signal restoring part **122,** a teletext data decoder **123,** a key handler **124,** a teletext display screen creating part **125,** and display hardware **126.**

The external RAM **130** includes a teletext data memory **131,** a page information memory **132,** a displaying method memory **133,** and a display VRAM **134**. Note that the external RAM **130** may include a plurality of separate RAMs or a single RAM. In the latter case, memory areas in the RAM may be allocated to these memories.

Note that the teletext signal restoring part **122,** the teletext data decoder **123,** the teletext display screen creating part **125,** the teletext data memory **131,** and the page information memory **132** constitute a teletext data reading/displaying part **140.**

The teletext data processing part **120,** the teletext data memory **131,** the page information memory **132,** and the displaying method memory **133** constitute a teletext decoding device.

The teletext signal restoring control part **121** controls the teletext signal restoring part **122.**

The teletext signal restoring part **122** receives a video signal that includes teletext data transmitted from a broadcast station, restores a teletext signal, and stores the teletext signal as teletext data into the teletext data memory **131.**

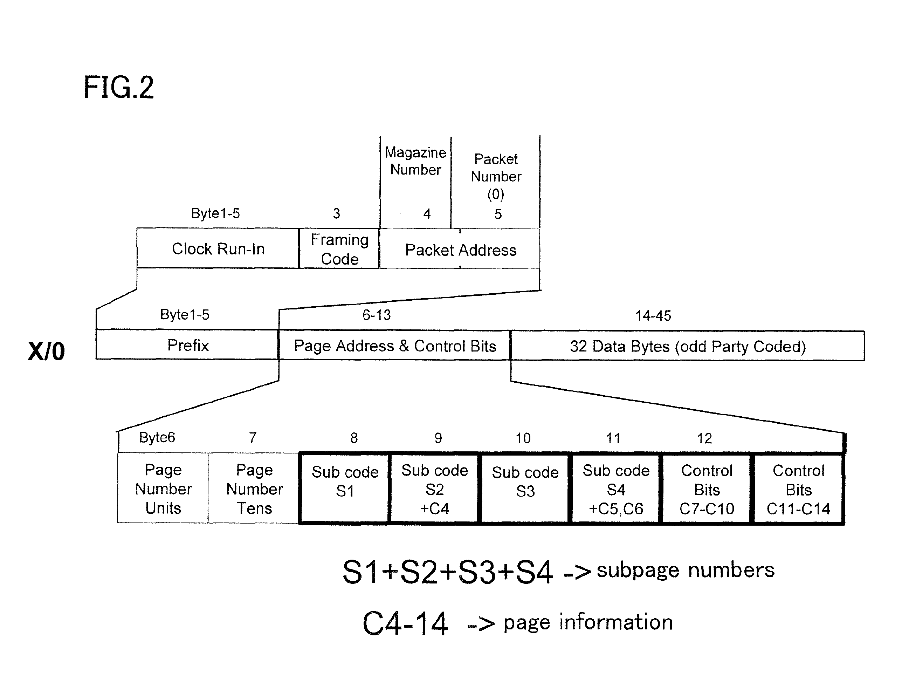

Here, a teletext signal that is processed by the teletext decoding device will be described. The teletext signal to be herein processed is defined in accordance with the standards ETSI EN300706. The teletext signal is composed of packets 0, 26, 27, 28, 29, 30 and 31 including control data and packets 1 to 25 including display data. FIG. **2** is a diagram for describing the data format of packet 0 of the teletext signal. Packet 0 contains page information, page type information and the like.

The teletext data decoder **123** reads out teletext data from the teletext data memory **131,** decodes the teletext data into decoded data, and stores the decoded data into the page information memory **132** for each page.

The key handler **124** receives a remote controller key input that designates a page to be displayed, and transmits information indicating the page designated by the remote controller key input to the teletext display screen creating part **125** and the display hardware **126.**

The teletext display screen creating part **125** reads out decoded data of a page designated by a remote controller key input from the page information memory **132,** creates image data suited to display, and writes the image data into the display VRAM **134**.

The display hardware **126** reads out image data from the display VRAM **134**, transmits the image data to the display device **110,** which in turn displays a teletext image.

The display device **110** displays a teletext image based on image data transmitted from the display hardware **126.**

The television receiver device of this embodiment can display teletext data of a page having multiple subpages that have the same page number and different contents by two displaying methods (subpage displaying methods).

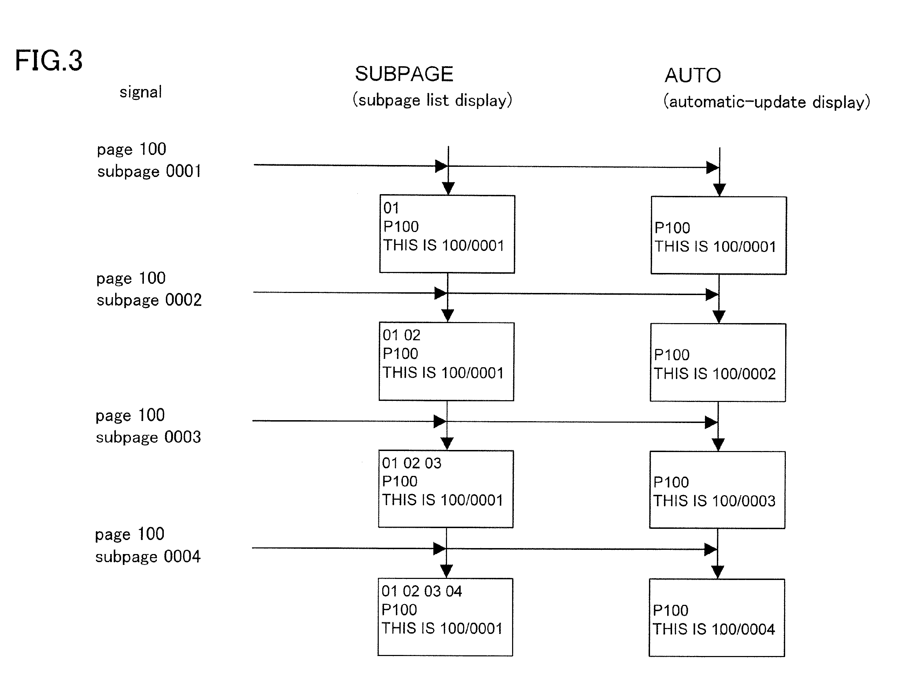

In a first one of the two displaying methods, as shown on a right-hand side of FIG. **3****,** a displayed teletext image is automatically updated irrespective of the subpage number when a teletext signal of a subpage that is different from the previous displayed subpage is received. This displaying method by automatic updating is referred to as automatic-update display, and is indicated by AUTO in the drawings.

In the other displaying method, as shown on a left-hand side of FIG. **3****,** subpage numbers are displayed in a region other than that in which teletext data is displayed, together with the teletext data on a screen of the display device **110,** to prompt the user to enter a remote controller key input so as to choose a subpage to be displayed, so that subpages to be displayed are switched, depending on the remote controller key input. This method of displaying a subpage list is hereinafter referred to as manual display, and is indicated by SUBPAGE in the drawings.

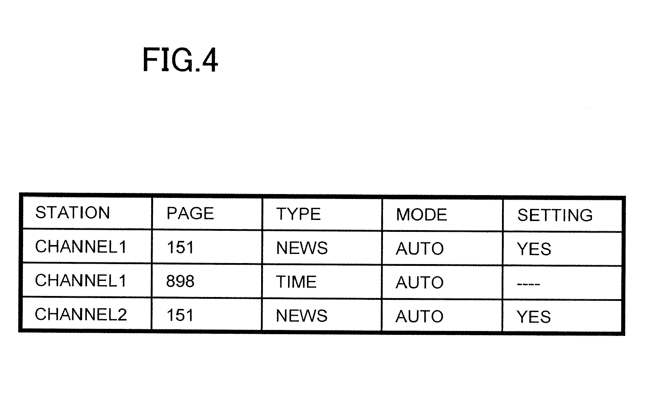

The displaying method memory **133** previously is stored a multi-subpage displaying method table (displaying method information), such as that shown in FIG. **4****.** The multi-subpage displaying method table indicates, station information (STATION), a page number (PAGE), page information (TYPE), a displaying method (MODE), and operation information (SETTING) that indicates whether display is enabled or disabled for each page. The page number is used to identify the page, and the page information indicates a type of the page.

The teletext display screen creating part **125** reads out decoded data of each page from the page information memory **132.** Thereafter, the teletext display screen creating part 125 identify page information in multi-subpage displaying method table in displaying method memory 133 based on station information (station name) and a page number, which are included in decoded data of the page. Thereafter, when the page information corresponding to the station information and the page number are present in the multi-subpage displaying method table, the teletext display screen creating part **125** transmits image data of the page to the display VRAM **134** so that the teletext data is displayed by a displaying method corresponding to the station information and the page number in the table.

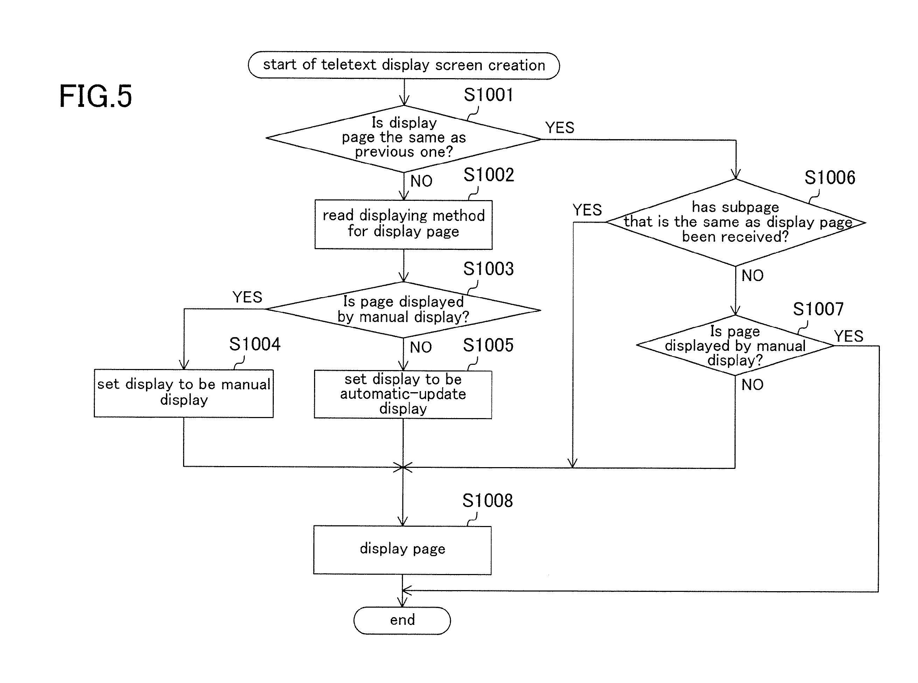

Hereinafter, an operation of the teletext display screen creating part **125** creating the image data of a page to be displayed will be described with reference to a flowchart of FIG. 5.

(S1001) The teletext display screen creating part **125** reads out decoded data of a page designated by a remote controller input received by the key handler **124,** from the page information memory **132.** Thereafter, the teletext display screen creating part **125** determines whether or not a current read page is the same as the previous read page. If they are different from each other, i.e., a new page has been read out, the operation goes to (S1002), or otherwise the operation goes to (S1006).

(S1002) The teletext display screen creating part **125** obtains a displaying method corresponding to the station information and page number of the current read page from the multi-subpage displaying method table stored in the displaying method memory **133.**

(S1003) The teletext display screen creating part **125** determines whether the displaying method obtained in (S1002) is the manual display (SUBPAGE) or the automatic-update display (AUTO). If the displaying method is the manual display, the operation goes to (S1004). If the displaying method is the automatic-update display, the operation goes to (S1005).

(S1004) The teletext display screen creating part **125** sets the displaying method for the current read page to be the manual display.

(S1005) The teletext display screen creating part **125** sets the displaying method of the current read page to be the automatic-update display.

(S1006) The teletext display screen creating part **125** determines whether or not the current read subpage is the same as the previous read subpage. If they are not the same, the operation goes to (S1007), or otherwise the operation goes to (S1008).

(S1007) The teletext display screen creating part **125** determines whether the displaying method already set is the manual display or the automatic-update display. If the displaying method is the manual display, the operation is ended. If the displaying method is the automatic-update display, the operation goes to (S1008).

(S 1008) The teletext display screen creating part **125** creates image data based on decoded data of the current read page, and writes the image data into the display VRAM **134.** In response to this, the display hardware **126** causes the display device **110** to display a teletext image based on the written image data.

Thus, the teletext decoding device displays a teletext image of each page by a displaying method that is indicated by the station information and page number in the multi-subpage displaying method table stored in the displaying method memory **133.** Therefore, when the multi-subpage displaying method table in which the page number is associated with a displaying method suitable for the page is stored in the displaying method memory 133, each page can be displayed by a suitable method.

Although a displaying method is determined based on both the station information and page number in this embodiment, a displaying method may be determined based on either of them, or alternatively, based on other attributes. For example, only page information and displaying methods may be stored in the multi-subpage displaying method table, and a page may be displayed by a displaying method corresponding to the page information.

### (Embodiment 2)

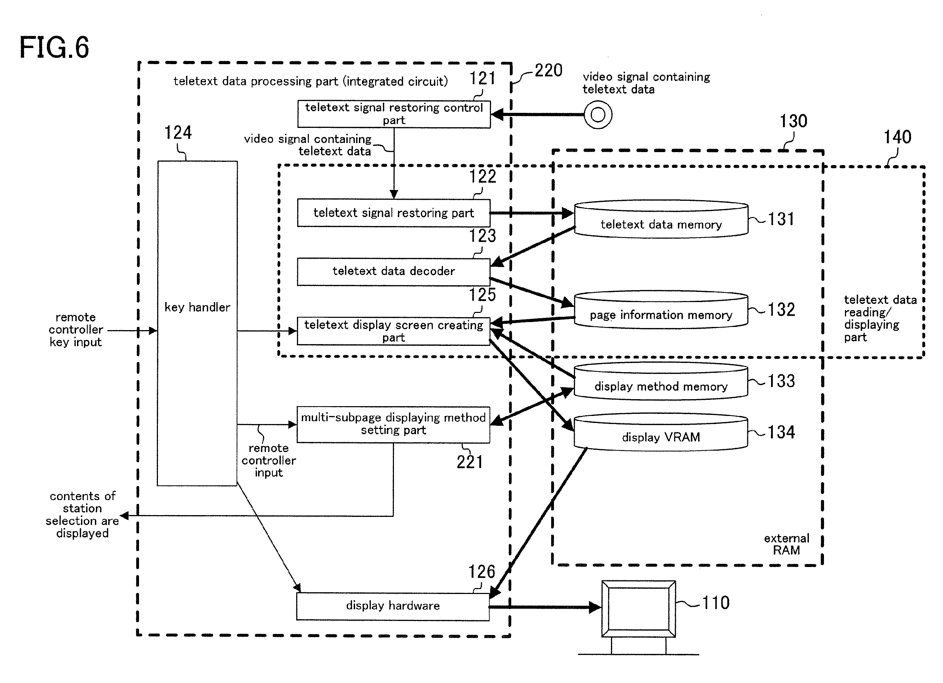

A television receiver device according to Embodiment 2 includes, as shown in FIG. **6****,** a teletext data processing part **220** instead of the teletext data processing part **120** of Embodiment 1. The teletext data processing part **220** includes a multi-subpage displaying method setting part **221** in addition to the components of the teletext data processing part **120** of Embodiment 1.

In this embodiment, the teletext data processing part **220,** the teletext data memory **131,** the page information memory **132,** and the displaying method memory **133** constitute a teletext decoding device.

The multi-subpage displaying method setting part **221** has a function of changing (modifying) the contents of the multi-subpage displaying method table stored in the displaying method memory **133.** More specifically, the multi-subpage displaying method setting part **221** instructs a display screen creating part (not shown) to create an image that displays contents of the multi-subpage displaying method table on a screen of the display device **110.** In accordance with this instruction, the display screen creating part creates the image displaying the contents of the multi-subpage displaying method table and writes the image data into a VRAM (not shown). Thereafter, display hardware (not shown) causes the display device **110** to display the contents of the multi-subpage displaying method table. Thereafter, the user uses a remote controller to change displaying methods for each page displayed on the screen. The multi-subpage displaying method setting part **221** stores the multi-subpage displaying method table changed by the user into the displaying method memory **133.** Thus, the user can choose a displaying method for each page by using the remote controller.

Although it has been assumed above that the multi-subpage displaying method setting part 221 of this embodiment changes the contents of the multi-subpage displaying method table in accordance with a user's remote controller input, the present invention is not limited to remote controllers. The contents of the multi-subpage displaying method table may be changed in accordance with an input by other input means, such as a keyboard, a mouse, and the like.

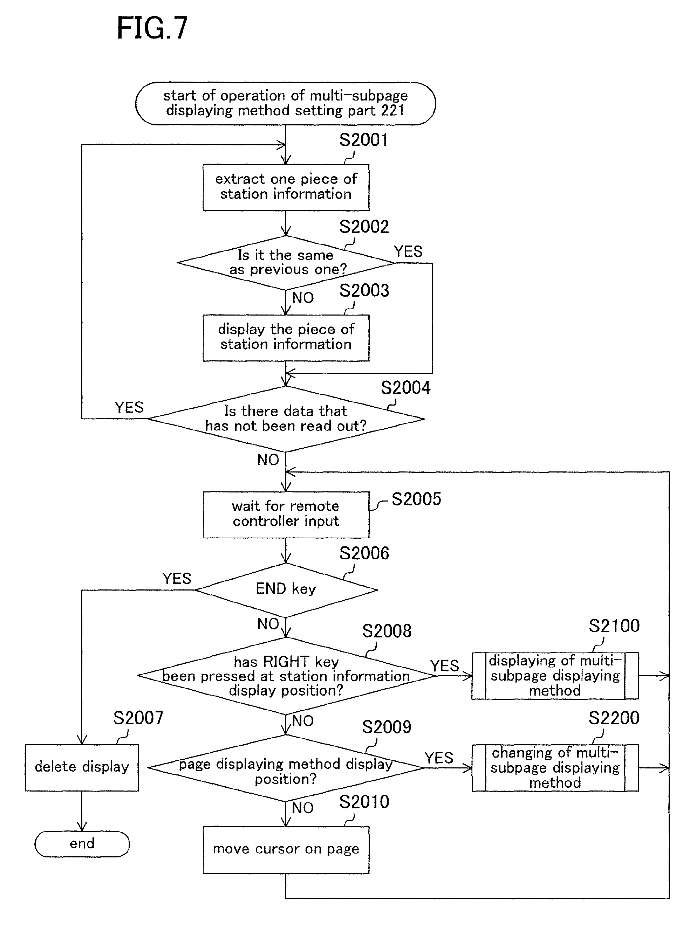

Hereinafter, an operation of the multi-subpage displaying method setting part **221** will be described with reference to a flowchart of FIG. 7.

(S2001) Initially, the multi-subpage displaying method setting part **221** extracts one piece of station information from the multi-subpage displaying method table.

(S2002) If the station information extracted in (S2001) is different from station information that has already been displayed on the display device **110,** the operation goes to (S2003). If the station information extracted in (S2001) is the same as the station information that has already been displayed on the display device **110,** the operation goes to (S2004) so as to prevent the same station information from being redundantly displayed.

(S2003) In order to cause the display device **110** to display the station information extracted in (S2001), the multi-subpage displaying method setting part **221** instructs the display screen creating part (not shown) to create an image of the station information.

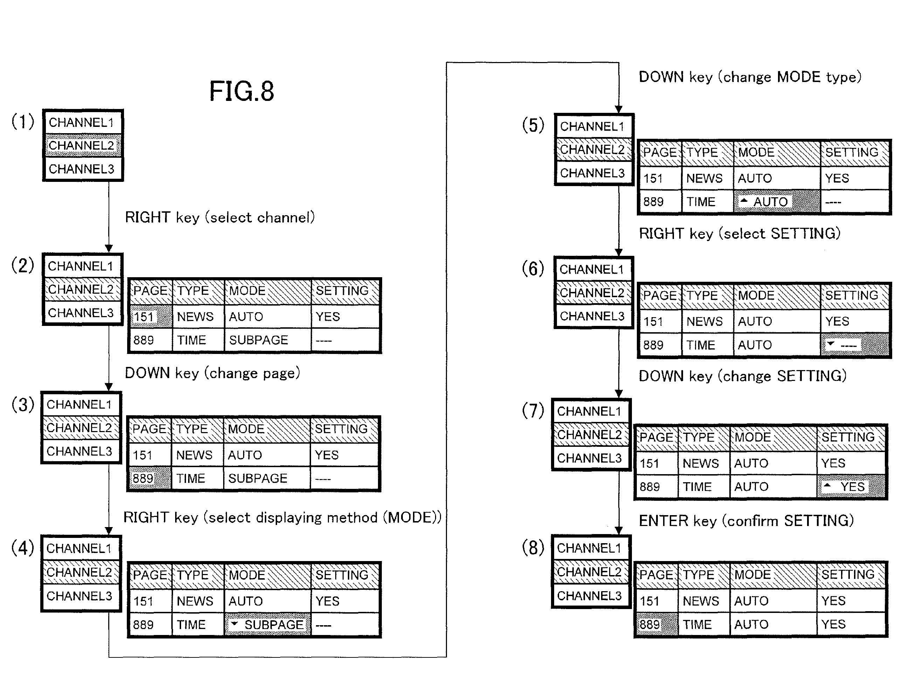

(S2004) The multi-subpage displaying method setting part **221** determines whether or not new station information to be extracted next is present in the multi-subpage displaying method table. If new station information to be extracted next is present, the operation returns to (S2001), or otherwise the operation goes to (S2005). When the steps up to (S2004) have been completed and the operation goes to (S2005), station information (channel information) is displayed as shown in portion **(1)** of FIG. **8****,** for example.

(S2005) The multi-subpage displaying method setting part **221** waits for a user's remote controller input. Specifically, the multi-subpage displaying method setting part **221** waits for a signal indicating the contents of a user's remote controller input that will be transmitted from the key handler **124.** If the signal is transmitted, i.e., the user enters an input using a remote controller, the operation goes to (S2006).

(S2006) The multi-subpage displaying method setting part **221** determines whether or not the user's remote controller input is an input for ending display of station information. Specifically, the multi-subpage displaying method setting part **221** determines whether or not the user's remote controller input is done through an END key. The display of the station information refers to a display, such as that shown in portion **(1)** of FIG. **8****,** for example. If the user's remote controller input is done through the END key, the operation goes to (S2007), or otherwise the operation goes to (S2008). Note that the remote controller input is determined based on a signal indicating a content of the remote controller input transmitted from the key handler **124.**

(S2007) In order to remove the display of the station information from the screen of the display device **110,** the multi-subpage displaying method setting part **221** instructs the display screen creating part (not shown) to create image data which the display of the station information is removed.

(S2008) The multi-subpage displaying method setting part **221** determines whether or not the user's remote controller input is done through a RIGHT key while a cursor is positioned on the station information displayed on the screen. If the user's remote controller input is done through the RIGHT key in such a situation, the operation goes to (S2100), or otherwise the operation goes to (S2009). In the case of portion **(1)** of FIG. **8****,** the cursor is positioned on CHANNEL2 which is station information. This is an exemplary situation in which the cursor is present on station information. In the example of FIG. **8****,** the RIGHT key is pressed in this situation, and the operation then goes to (S2100).

(S2100) The multi-subpage displaying method setting part **221** instructs the display screen creating part (not shown) to cause the display device **110** to display the page number, page information, displaying method, and operation information of a page corresponding to the station information on which the cursor is positioned in (S2008). After the instruction, the operation goes to (S2005). Here, a display, such as that shown in portion **(2)** of FIG. **8****,** appears on the screen of the display device **110.** An operation in this case of the multi-subpage displaying method setting part **221** will be described elsewhere below.

(S2009) The multi-subpage displaying method setting part **221** determines whether or not the cursor is positioned on any one of displays of a page number, a displaying method, and operation information on the screen. If the cursor is positioned on any one of them, the operation goes to (S2200), or otherwise the operation goes to (S2010).

(S2200) The multi-subpage displaying method setting part **221** performs a process in accordance with a user's remote controller input for changing the multi-subpage displaying method table. This process will be described elsewhere below. If the process is completed, the operation returns to (S2005).

(S2010) In order to change a position of the station information on the screen, the multi-subpage displaying method setting part **221** instructs the display screen creating part (not shown) to create image data of an image in which the position of the station information is changed, and returns to (S2005).

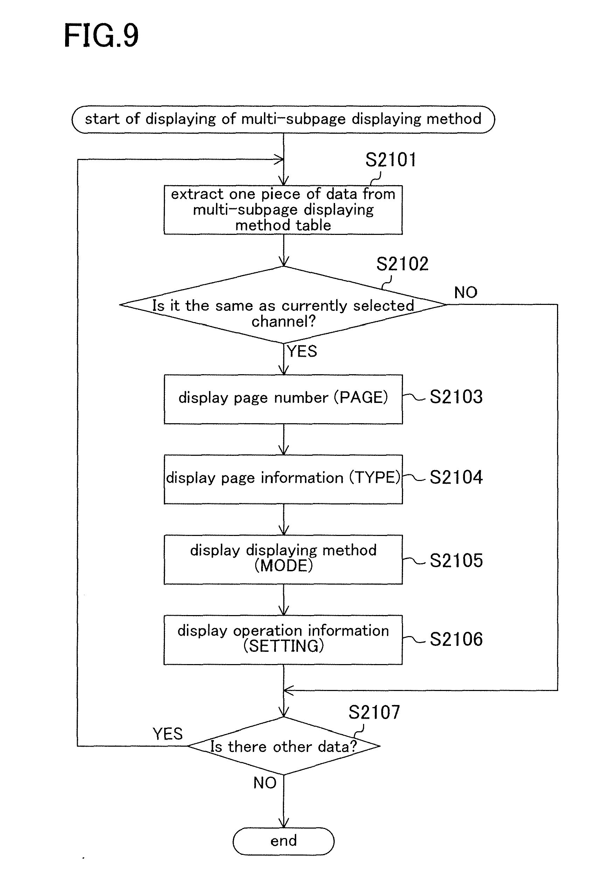

Here, a detailed operation in (S2100) of the multi-subpage displaying method setting part **221** will be described with reference to a flowchart of FIG. **9****.**

(S2101) The multi-subpage displaying method setting part **221** extracts one piece of station information from the multi-subpage displaying method table stored in the displaying method memory **133.**

(S2102) The multi-subpage displaying method setting part **221** determines whether or not the station information extracted in (S2101) is the same as station information designated by the cursor. For example, if the display of portion **(1)** of FIG. **8** is presented on the screen, the multi-subpage displaying method setting part **221** determines whether or not the station information extracted in (S2101) is CHANNEL2. If the station information extracted in (S2101) is the same as the station information designated by the cursor, the operation goes to (S2103), or otherwise the operation goes to (S2107).

(S2103) to (S2106) In order to cause the display device **110** to display the page number (PAGE), page information (TYPE), displaying method (MODE), and operation information (SETTING) indicating whether to enable or disable display, of a page whose station information has been extracted in (S2101), the multi-subpage displaying method setting part **221** instructs the display screen creating part (not shown) to create an image in which these displays are added.

(S2107) The multi-subpage displaying method setting part **221** determines whether or not new station information to be next extracted is present in the multi-subpage displaying method table. If new station information is present, the operation goes to (S2101), or otherwise the process of (S2100) is ended.

By the process of (S2100), a display, such as that shown in portion **(2)** of FIG. **8****,** appears on the screen.

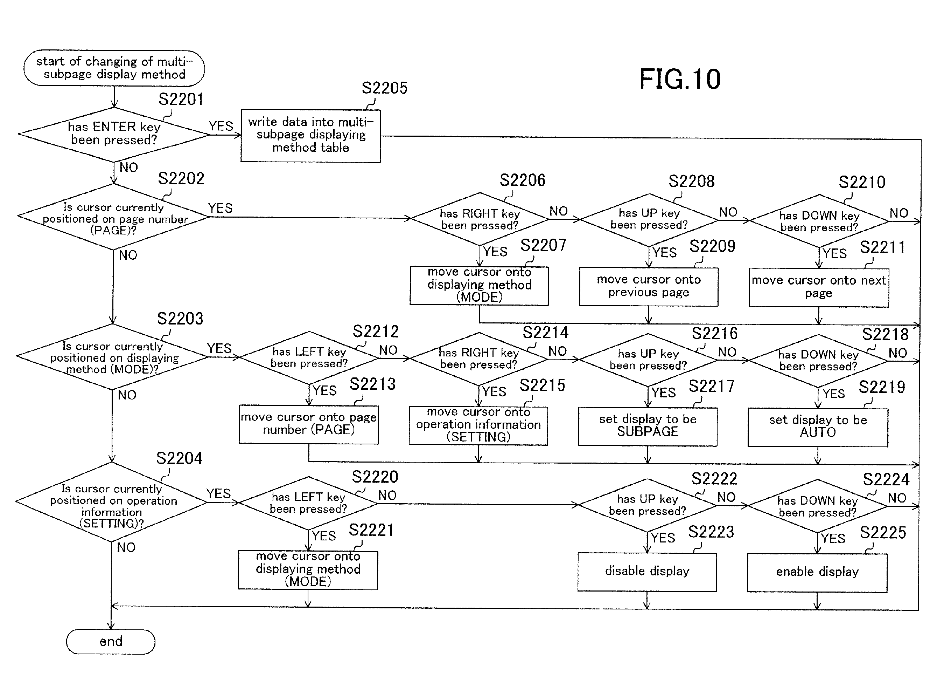

Further, a detailed operation in (S2200) of the multi-subpage displaying method setting part **221** will be described with reference to a flowchart of FIG. **10****.**

(S2201) The multi-subpage displaying method setting part **221** determines whether or not the user's remote controller input is done through an ENTER key on the remote controller. If the user's remote controller input is not done through the ENTER key, the operation goes to (S2202), or otherwise the operation goes to (S2205).

(S2202) The multi-subpage displaying method setting part **221** determines whether or not the cursor is currently positioned on a page number (PAGE). If the cursor is present on a page number, the operation goes to (S2206), or otherwise, the operation goes to (S2203). For example, in portions **(2)** and **(3)** of FIG. **8****,** since the cursor is present on a page number, the operation goes to (S2206).

(S2203) The multi-subpage displaying method setting part **221** determines whether or not the cursor is currently positioned on a displaying method (MODE). If the cursor is present on a displaying method, the operation goes to (S2212), or otherwise the operation goes to (S2204). For example, in portions **(4)** and **(5)** of FIG. **8****,** since the cursor is present on a displaying method, the operation goes to (S2212).

(S2204) The multi-subpage displaying method setting part **221** determines whether or not the cursor is currently positioned on operation information (SETTING) indicating whether to enable or disable display of a page. If the cursor is present on operation information, the operation goes to (S2220), or otherwise the process of (S2200) is ended. For example, in portions **(6)** and **(7)** of FIG. **8****,** since the cursor is present on operation information, the operation goes to (S2220).

(S2205) The multi-subpage displaying method setting part **221** stores current settings on the screen into the displaying method memory **133,** replacing the previous multi-subpage displaying method table, and ends the process of (S2200). For example, between portions **(7)** and **(8)** of FIG. **8****,** since the ENTER key is pressed, settings displayed in portion **(7)** of FIG. **8** are stored as a new multi-subpage displaying method table into the displaying method memory **133.**

(S2206) The multi-subpage displaying method setting part **221** determines whether or not the user's remote controller input is done through the RIGHT key on the remote controller. If the user's remote controller input is done through the RIGHT key, the operation goes to (S2207), or otherwise the operation goes to (S2208). For example, between portions **(3)** and **(4)** of FIG. **8****,** since the RIGHT key is pressed, the operation goes to (S2207).

(S2207) The multi-subpage displaying method setting part **221** moves the cursor onto a displaying method (MODE). More specifically, in order to display on the display device **110** an image in which the cursor is moved onto the displaying method, the multi-subpage displaying method setting part **221** instructs the display screen creating part (not shown) to create the image, and then ends the process of (S2200). For example, between portions **(3)** and **(4)** of FIG. **8****,** the cursor is moved from a page number 889 onto a displaying method SUBPAGE. Note that, also in the following description, when the multi-subpage displaying method setting part **221** moves the cursor, the multi-subpage displaying method setting part **221** actually instructs the display screen creating part (not shown) to create an image in which the cursor is moved, which will not be described.

(S2208) The multi-subpage displaying method setting part **221** determines whether or not the user's remote controller input is done through an UP key on the remote controller. If the user's remote controller input is done through the UP key, the operation goes to (S2209), or otherwise the operation goes to (S2210).

(S2209) The multi-subpage displaying method setting part **221** moves the cursor onto the previous page, and then ends the process of (S2200). Here, the previous page refers to a page that is displayed in an upper portion of the screen.

(S2210) The multi-subpage displaying method setting part **221** determines whether or not the user's remote controller input is done through a DOWN key on the remote controller. If the user's remote controller input is done through the DOWN key, the operation goes to (S2211), or otherwise the process of (S2200) is ended. For example, between portions **(2)** and **(3)** of FIG. **8****,** since the DOWN key is pressed, the operation goes to (S2211).

(S2211) The multi-subpage displaying method setting part **221** moves the cursor onto the next page, and then ends the process of (S2200). Here, the next page is a page that is displayed in a lower portion on the screen. For example, between portions **(2)** and **(3)** of FIG. **8****,** the cursor is moved from a page number 151 onto the page number 889.

(S2212) The multi-subpage displaying method setting part **221** determines whether or not the user's remote controller input is done through a LEFT key on the remote controller. If the user's remote controller input is done through the LEFT key, the operation goes to (S2213), or otherwise the operation goes to (S2214).

(S2213) The multi-subpage displaying method setting part **221** moves the cursor onto a page number (PAGE), and then ends the process of (S2200).

(S2214) The multi-subpage displaying method setting part **221** determines whether or not the user's remote controller input is done through the RIGHT key on the remote controller. If the user's remote controller input is done through the RIGHT key, the operation goes to (S2215), or otherwise the operation goes to (S2216). For example, between portions **(5)** and **(6)** of FIG. **8****,** since the RIGHT key is pressed, the operation goes to (S2215).

(S2215) The multi-subpage displaying method setting part **221** moves the cursor onto operation information (SETTING) indicating whether to enable or disable display of a page, and then ends the process of (S2200). For example, between portions **(5)** and **(6)** of FIG. **8****,** the cursor is moved from a displaying method AUTO onto operation information.

(S2216) The multi-subpage displaying method setting part **221** determines whether or not a user's remote controller input is done through the UP key on the remote controller. If the user's remote controller input is done through the UP key, the operation goes to (S2217), or otherwise the operation goes to (S2218).

(S2217) The multi-subpage displaying method setting part **221** changes a display designated by the cursor to SUBPAGE, and then ends the process of (S2200).

(S2218) The multi-subpage displaying method setting part **221** determines whether or not the user's remote controller input is done through the DOWN key. If the user's remote controller input is done through the DOWN key, the operation goes to (S2219), or otherwise the process of (S2200) is ended. For example, between portions **(4)** and **(5)** of FIG. **8****,** since the DOWN key is pressed, the operation goes to (S2219).

(S2219) The multi-subpage displaying method setting part **221** changes a display designated by the cursor to AUTO, and then ends the process of (S2200). For example, in portion **(5)** of FIG. **8****,** a display designated by the cursor is AUTO.

(S2220) The multi-subpage displaying method setting part **221** determines whether or not the user's remote controller input is done through the LEFT key. If the user's remote controller input is done through the LEFT key, the operation goes to (S2221), or otherwise the operation goes to (S2222).

(S2221) The multi-subpage displaying method setting part **221** moves the cursor onto a displaying method (MODE), and then ends the process of (S2200).

(S2222) The multi-subpage displaying method setting part **221** determines whether or not the user's remote controller input is done through the UP key. If the user's remote controller input is done through the UP key, the operation goes to (S2223), or otherwise the operation goes to (S2224).

(S2223) The multi-subpage displaying method setting part **221** changes a display designated by the cursor to NO, and then ends the process of (S2200). Note that, here, the display of NO on the screen indicates that display is disabled, and a display of YES indicates that display is enabled.

(S2224) The multi-subpage displaying method setting part **221** determines whether or not the user's remote controller input is done through the DOWN key. If the user's remote controller input is done through the DOWN key, the operation goes to (S2225), or otherwise the process of (S2200) is ended. For example, between portions **(6)** and **(7)** of FIG. **8****,** since the DOWN key is pressed, the operation goes to (S2225).

(S2225) The multi-subpage displaying method setting part **221** changes a display indicated by the cursor to YES, and then ends the process of (S2200). For example, in portion **(7)** of FIG. **8****,** a display indicated by the cursor is YES.

### (Embodiment 3)

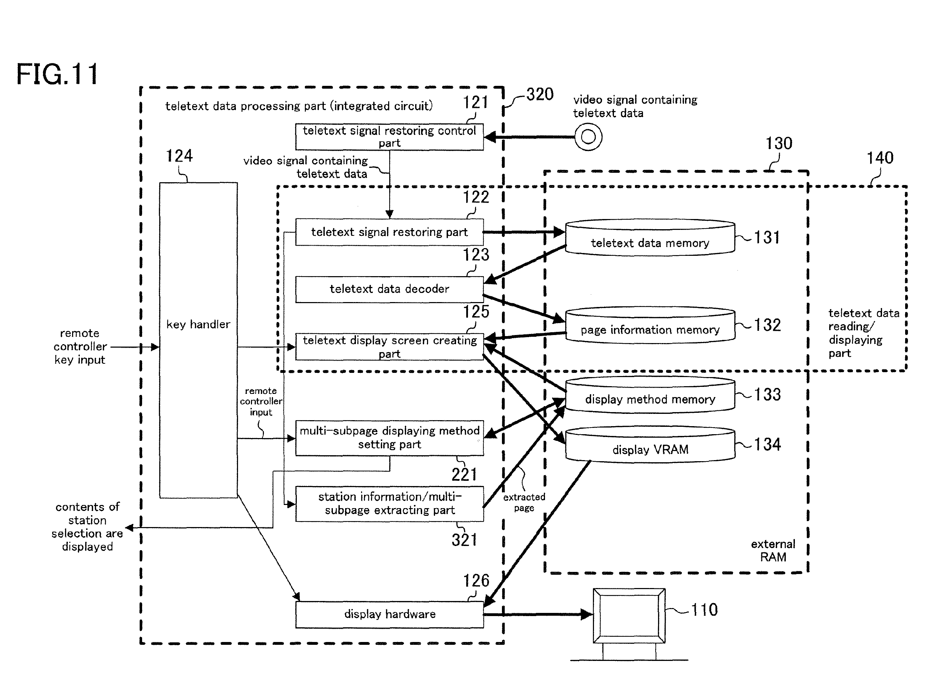

A television receiver device according to Embodiment 3 includes, as shown in FIG. **11****,** a teletext data processing part **320** instead of the teletext data processing part **220** of Embodiment 2. The teletext data processing part **320** includes a station information/multi-subpage extracting part **321** in addition to the components of the teletext data processing part **220** of Embodiment 2.

In this embodiment, the teletext data processing part **320,** the teletext data memory **131,** the page information memory **132,** and the displaying method memory **133** constitute a teletext decoding device.

The station information/multi-subpage extracting part **321** receives a teletext signal that has been restored by the teletext signal restoring part **122,** detects a multi-subpage, and adds the multi-subpage to the multi-subpage displaying method table stored in the displaying method memory **133.** Contents of the multi-subpage displaying method table are displayed on a display device as described in Embodiment 2, so that the user can know all multi-subpages to be displayed. Also, since a page that is not a multi-subpage is not displayed, it is possible to prevent the user from trying to set a displaying method for a page that is not a multi-subpage.

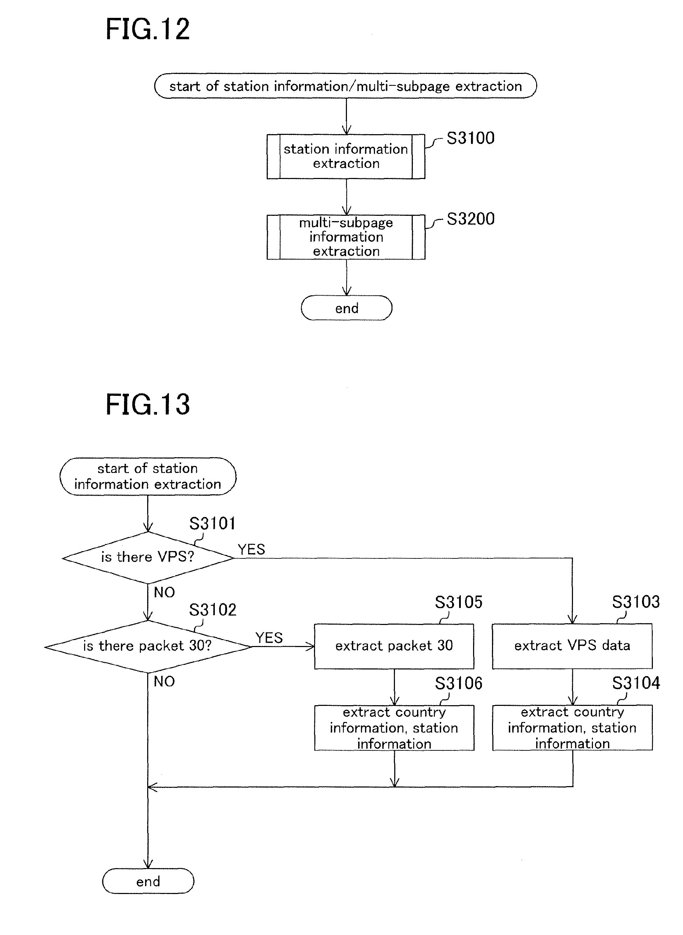

Hereinafter, an operation of the station information/multi-subpage extracting part **321** will be described with reference to a flowchart of FIG. **12****.**

(S3100) The station information/multi-subpage extracting part **321** (multi-subpage extracting part) extracts station information (STATION) from a teletext signal (teletext data) that has been restored by the teletext signal restoring part **122.**

(S3200) Further, the station infonnation/multi-subpage extracting part **321** (multi-subpage extracting part) extracts page information (TYPE) of a multi-subpage from the teletext signal (teletext data) restored by the teletext signal restoring part **122.** Thereafter, the station information/multi-subpage extracting part **321** analyzes the extracted page information, and count subpages in a page, and determine a subpage displaying method.

The station information/multi-subpage extracting part **321** performs the processes of (S3100) and (S3200) for each page.

Also, a detailed operation in (S3100) of the station information/multi-subpage extracting part **321** will be described with reference to a flowchart of FIG. **13****.**

(S3101) The station information/multi-subpage extracting part **321** determines whether or not VPS (Video Programming System) data is present in the teletext signal restored by the teletext signal restoring part **122.** If VPS (Video Programming System) data is not present, the operation goes to (S3102), or otherwise the operation goes to (S3103).

(S3102) The station information/multi-subpage extracting part **321** determines whether or not packet 30 is present in the teletext signal restored by the teletext signal restoring part **122.** If packet 30 is present, the operation goes to (S3105), or otherwise the process of (S3100) is ended.

(S3103) The station information/multi-subpage extracting part **321** extracts the VPS data.

(S3104) The station information/multi-subpage extracting part **321** extracts country information and station information, finally confirms the station information, and ends the process of (S3100).

(S3105) The station information/multi-subpage extracting part **321** extracts data of packet 30.

(S3106) The station information/multi-subpage extracting part **321** extracts country information and station information, finally confirms the station information, and ends the process of (S3100).

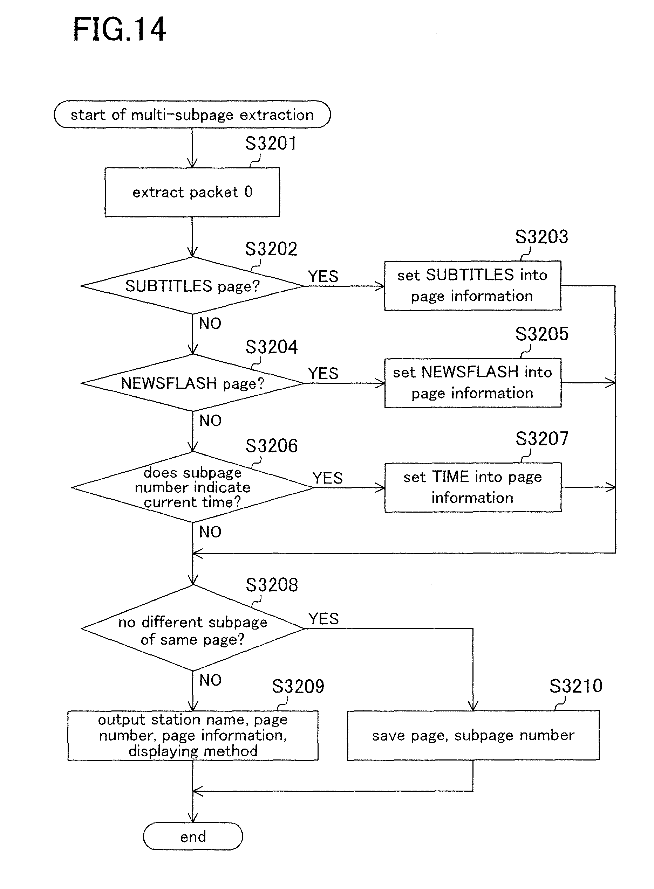

Further, a detailed operation in (S3200) of the station information/multi-subpage extracting part **321** will be described with reference to a flowchart of FIG. **14****.**

(S3201) The station information/multi-subpage extracting part **321** extracts packet 0.

(S3202) The station information/multi-subpage extracting part **321** determines whether or not page information indicated by packet 0 extracted in (S3201) is subtitles (SUBTITLES). If the page information is subtitles, the operation goes to (S3203), or otherwise the operation goes to (S3204).

(S3203) The station information/multi-subpage extracting part **321** sets page information to be subtitles.

(S3204) The station information/multi-subpage extracting part **321** determines whether or not the page information indicated by packet 0 extracted in (S3201) is a newsflash (NEWSFLASH). If the page information is a newsflash, the operation goes to (S3205), or otherwise the operation goes to (S3206).

(S3205) The station information/multi-subpage extracting part **321** sets page information to be newsflash.

(S3206) The station information/multi-subpage extracting part **321** determines whether or not a subpage number indicated by packet 0 extracted in (S3201) is the same as a current time. If the subpage number is the same as the current time, the operation goes to (S3207), or otherwise the operation goes to (S3208).

(S3207) The station information/multi-subpage extracting part **321** sets page information to be time (TIME).

(S3208) The station information/multi-subpage extracting part **321** determines whether or not subpages that have the same page number and different subpage numbers are present in the internal table. If the subpages are present, the operation goes to (S3209), or otherwise the operation goes to (S3210).

(S3209) The station information/multi-subpage extracting part **321** outputs the country information and station information extracted in (S3100), a page number indicated by packet 0 extracted in (S3201), and the set page information, determines and outputs a displaying method for a page, and then ends the process of (S3200). The output station information, page number, page information and displaying method are added to the multi-subpage displaying method table in the displaying method memory **133.**

(S3210) The station information/multi-subpage extracting part **321** saves the page number and the subpage number into the internal table.

The station information/multi-subpage extracting part **321** repeats the process of (S3200) for each packet 0, to output information about a multi-subpage in a teletext signal to the displaying method memory **133.**

### (Embodiment 4)

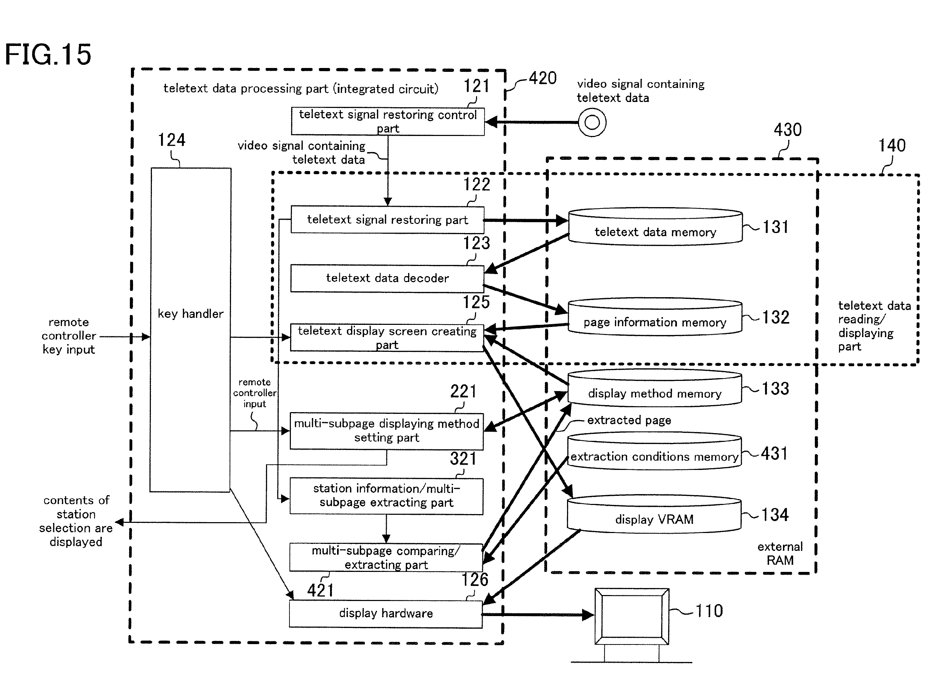

A television receiver device according to Embodiment 4 includes, as shown in FIG. **15****,** a display device **110,** a teletext data processing part **420,** and an external RAM (externally provided RAM) **430.** The teletext data processing part **420** includes a multi-subpage comparing/extracting part **421** in addition to the components of the teletext data processing part **320** of Embodiment 3. The external RAM **430** includes an extraction conditions memory **431** in addition to the components of the external RAM **130** of Embodiment 3.

In this embodiment, the teletext data processing part **420,** the teletext data memory **131,** the page information memory **132,** the displaying method memory **133,** and the extraction conditions memory **431** constitute a teletext decoding device.

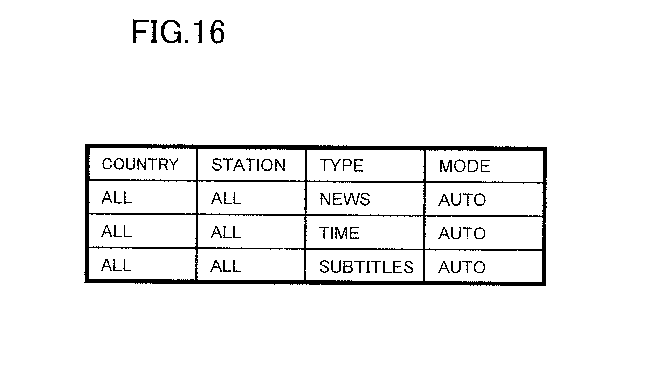

In the extraction conditions memory **431,** a multi-subpage extraction conditions table, such as that shown in FIG. **16****,** is stored. This multi-subpage extraction conditions table indicates country information (COUNTRY), station information (STATION), page information (page type) (TYPE), and a displaying method (MODE) for each page as shown in FIG. **16****.**

The multi-subpage comparing/extracting part **421** compares information output by the station information/multi-subpage extracting part **321** with conditions listed in the multi-subpage extraction conditions table. Thereafter, the multi-subpage comparing/extracting part **421** extracts a multi-subpage for which matching conditions are present in the multi-subpage extraction conditions table, and adds the page number, station information and page information of the multi-subpage to the multi-subpage displaying method table stored in the displaying method memory **133.**

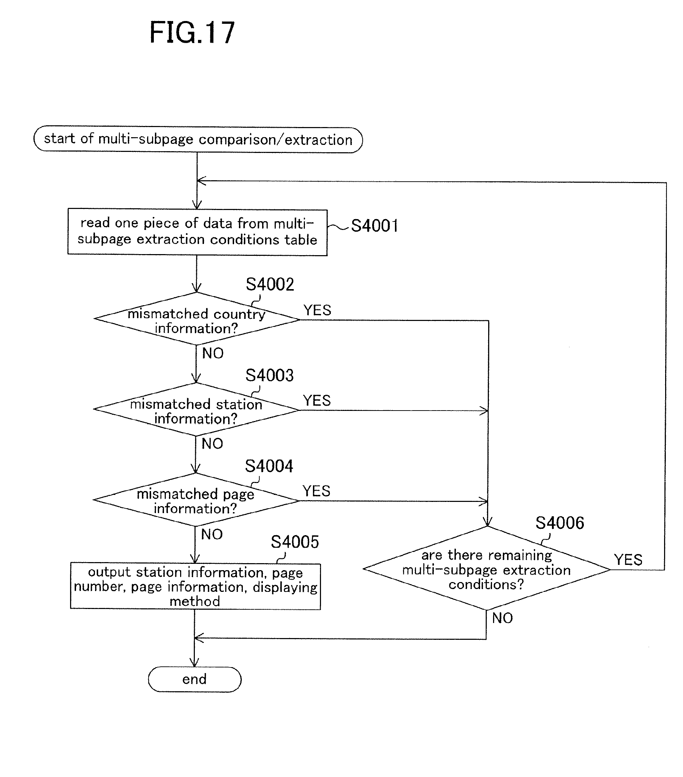

Hereinafter, an operation of the multi-subpage comparing/extracting part **421** will be described with reference to a flowchart of FIG. **17****.**

(S4001) The multi-subpage comparing/extracting part **421** reads out a set of data from the multi-subpage extraction conditions table. A set of data refers to one row of data in FIG.**16****.**

(S4002) The multi-subpage comparing/extracting part **421** determines whether or not the country information extracted by the station information/multi-subpage extracting part **321** is the same as country information contained in the data read out in (S4001). If they are the same, the operation goes to (S4003), or otherwise the operation goes to (S4006). Note that, if country information is ALL in the data read out in (S4001), it is determined that they are the same even when the country information extracted by the station information/multi-subpage extracting part **321** indicates any country. The same is true of other pieces of information, such as station information and the like.

(S4003) The multi-subpage comparing/extracting part **421** determines whether or not the station information extracted by the station information/multi-subpage extracting part **321** is the same as station information contained in the data read out in (S4001). If they are the same, the operation goes to (S4004), or otherwise the operation goes to (S4006).

(S4004) The multi-subpage comparing/extracting part **421** determines whether or not the page information extracted by the station information/multi-subpage extracting part **321** is the same as page information contained in the data read out in (S4001). If they are the same, the operation goes to (S4005), or otherwise the operation goes to (S4006). In other words, if there is a match in all of country information, station information, and page information, the operation goes to (S4005). If there is a mismatch in at least one of country information, station information, and page information, the operation goes to (S4006).

(S4005) The multi-subpage comparing/extracting part **421** outputs a displaying method (MODE) contained in the data read out in (S4001) in addition to the station information, page number and page information extracted by the station information/multi-subpage extracting part **321.** The output station information, page number, page information and displaying method are added to the multi-subpage displaying method table of the displaying method memory **133.**

(S4006) The multi-subpage comparing/extracting part **421** determines whether or not there is data that has not yet been read out from the multi-subpage extraction conditions table, i.e., there are multi-subpage extraction conditions that have not been compared. If there is such data or conditions, the operation returns to (S4001), or otherwise the operation is ended.

According to this embodiment, by setting extraction conditions in advance, it is possible to reduce pages contained in a multi-subpage displaying method table. Therefore, even when teletext data is displayed based on a signal that is transmitted from a broadcast station and has a lot of pages to be displayed, it is possible to prevent an increase in the number of pages contained in a multi-subpage displaying method table. In other words, it is possible to prevent an increase in pages to be selected by the user.

### (Embodiment 5)

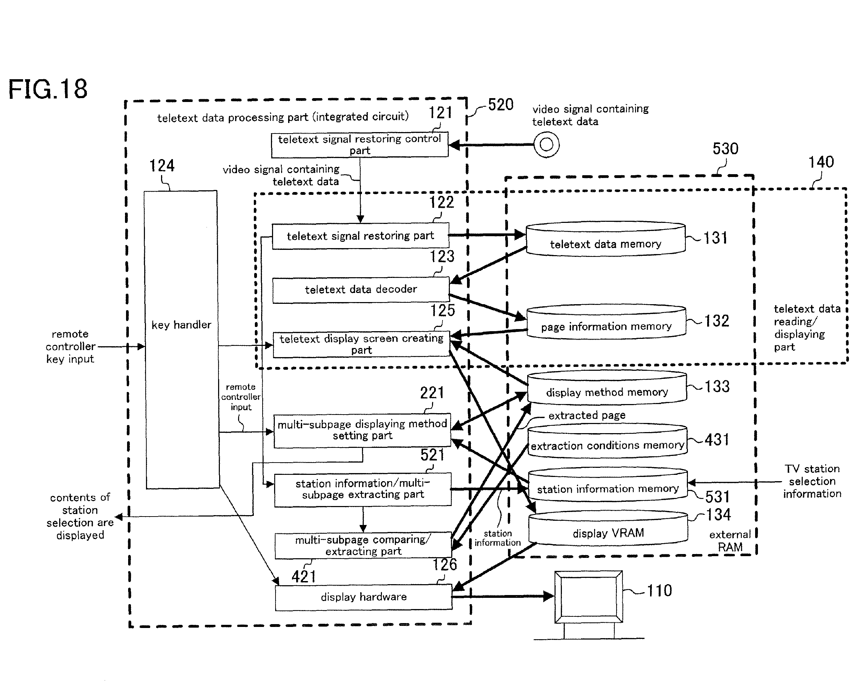

A television receiver device according to Embodiment 5 includes, as shown in FIG. **18****,** a display device **110,** a teletext data processing part **520,** and an external RAM (externally provided RAM) **530.** The teletext data processing part **520** includes a station information/multi-subpage extracting part **521** instead of the station information/multi-subpage extracting part **321** of the teletext data processing part **420** of Embodiment 4. The external RAM **530** includes a station information memory **531** in addition to the components of the external RAM **430** of Embodiment 4.

In this embodiment, the teletext data processing part **520,** the teletext data memory **131,** the page information memory **132,** the displaying method memory **133,** and the extraction conditions memory **431** constitute a teletext decoding device.

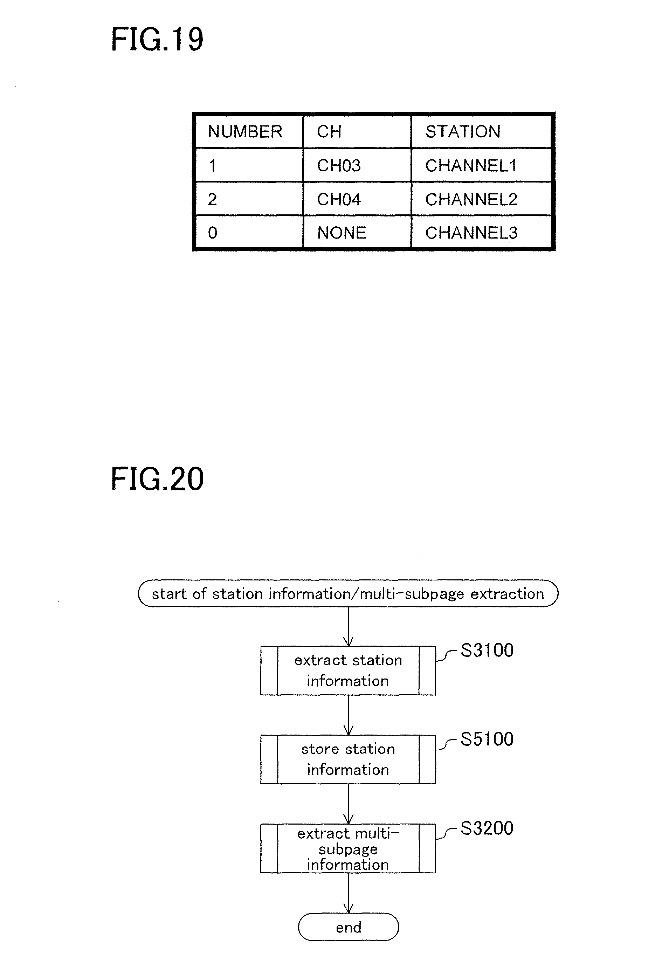

The station information memory **531** stores a station information table, such as that shown in FIG. **19****.** This station information table indicates an internal number (NUMBER), an RF channel (CH), and station information (STATION) in association with each other as shown in FIG. **19****.** The television receiver device, when receiving an internal number input by, for example, a user's operation of a remote controller, refers to the station information table and receives an RF channel corresponding to the internal number. Note that information indicating an internal number, an RF channel, and station information in association with each other as used herein refers to station selection information.

The station information/multi-subpage extracting part **521** extracts station information from a teletext signal restored by the teletext signal restoring part **122,** and outputs the extracted station information to the station information memory **531.** The output station information is written into the station information table of the station information memory **531,** and is used in combination with the station selection information possessed by the television receiver device. As used herein, the station selection information possessed by the television receiver device refers to information that is obtained by automatic scanning or the like (e.g., information shown in two upper stages of FIG. **19****,** i.e., information corresponding to CH03 and CH04).

Also, in this embodiment, the multi-subpage displaying method setting part **221** uses station selection information indicated in the station information table instead of station information of the multi-subpage displaying method table used in Embodiment 3 or 4. Therefore, this station selection information is displayed as a display image, such as that shown in portion **(1)** of FIG. **8****,** on the display device **110** instead of station information included in the multi-subpage displaying method table. In other words, although only station information is displayed in portion **(1)** of FIG. **8****,** an internal number, an RF channel, and station information are displayed in association with each other in this embodiment. When the user of the television receiver device designates a piece of station information contained in the displayed station selection information, the page number, displaying method and the like of a page corresponding to the designated station information are displayed. For example, if CHANNEL2 is designated, information, such as that which is indicated in a square enclosed by a thick line in portion **(2)** of FIG. **8****,** is displayed in addition to the station selection information.

Thus, by providing the station information/multi-subpage extracting part **521,** a television receiver device including a teletext decoding device can manage station information in a unified manner. In other words, station selection information possessed by the television receiver device and station information extracted from a teletext signal can be managed in a unified manner, so that pieces of station information no longer need to be separately managed.

Hereinafter, an operation of the station information/multi-subpage extracting part **521** will be described with reference to a flowchart of FIG. **20****.**

(S3100) The station information/multi-subpage extracting part **521** extracts station information from a teletext signal restored by the teletext signal restoring part **122.**

(S5100) The station information/multi-subpage extracting part **521** stores the station information extracted in (S3100) into the station information table of the station information memory **531.**

(S3200) The station information/multi-subpage extracting part **521** extracts the page information (TYPE) of a multi-subpage from the teletext signal restored by the teletext signal restoring part **122.**

Note that the detailed operations in (S3100) and (S3200) of the station information/multi-subpage extracting part **521** are similar to the operations of the station information/multi-subpage extracting part **321** described in Embodiment 3. In other words, the station information/multi-subpage extracting part **521** performs the operation of (S5100) in addition to the operations of the station information/multi-subpage extracting part **321** of Embodiments 3 and 4.

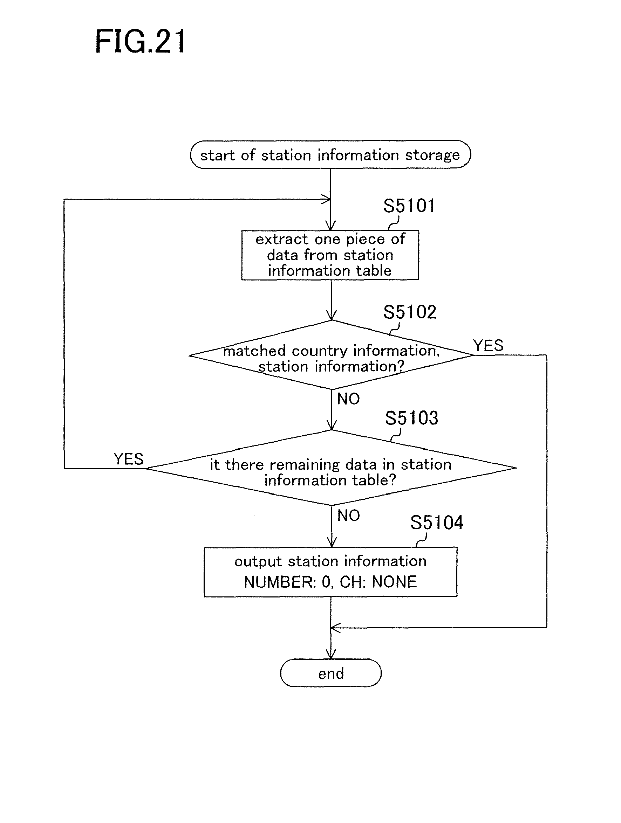

Next, a detailed operation in (S5100) of the station information/multi-subpage extracting part **521** will be described with reference to a flowchart of FIG. **21****.**

(S5101) The station infonnation/multi-subpage extracting part **521** extracts a set of data from the station information table of the station information memory **531.** A set of data refers to one row of data in FIG. **19****.**

(S5102) The station information/multi-subpage extracting part **521** compares station information (STATION) contained in the data extracted in (S5101) with the station information extracted in (S3100). If they are the same, the process of (S5100) is ended, or otherwise the operation goes to (S5103).

(S5103) The station information/multi-subpage extracting part **521** determines whether or not all data of the station information table has been compared in (S5102). If there is data that has not been compared, the operation returns to (S5101), or otherwise the operation goes to (S5104).

(S5104) The station information/multi-subpage extracting part **521** outputs the station information extracted in (S3100) as new station information to the station information memory **531.** The output station information is stored into the station information memory **531** with the internal number being 0 and the RF channel being NONE.

Note that, in this embodiment, information obtained by associating the output station information with 0 and NONE as an internal signal and an RF channel is added to the station information table. However, the present invention is not limited to 0 and NONE. Information obtained by associating the output station information with other predetermined data may be added to the station information table.

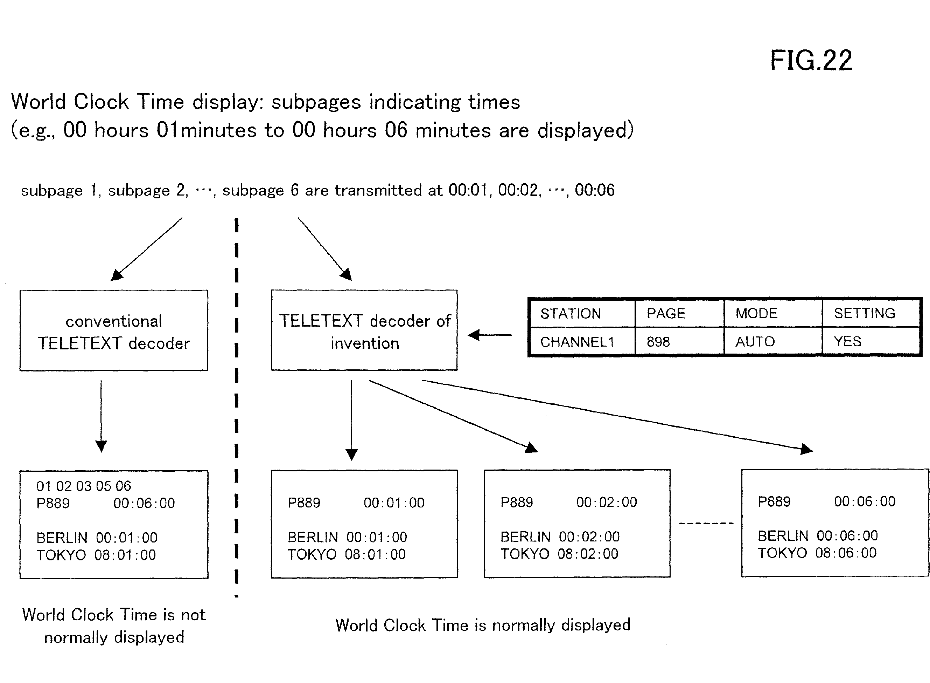

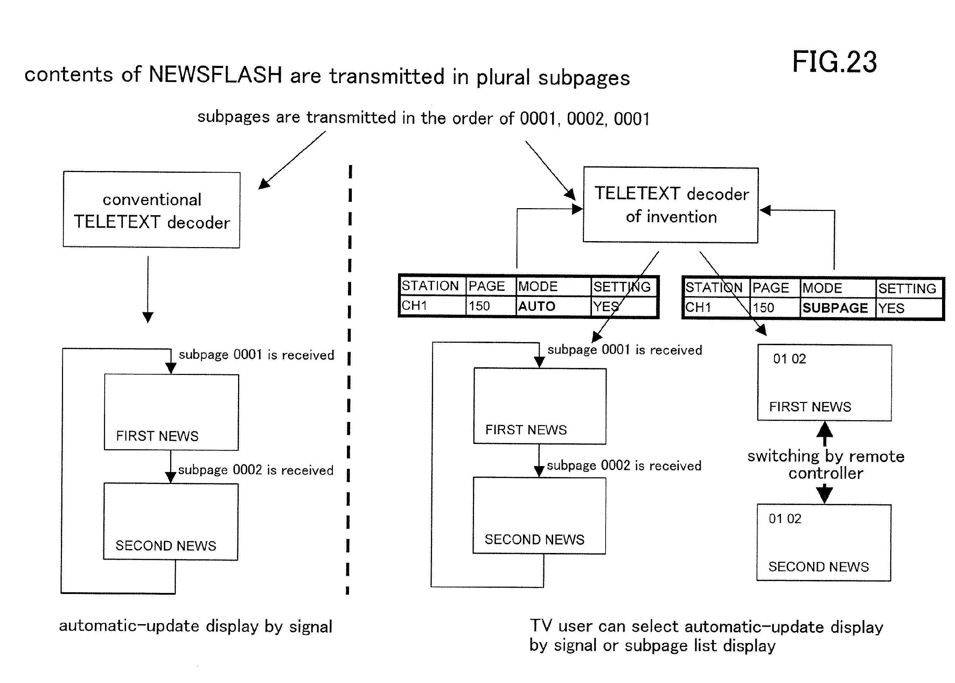

Hereinafter, an exemplary screen displayed by the television receiver devices of Embodiments 1 to 5 will be described with reference to FIGS. **22** and **23****.**

FIG. **22** is a diagram for describing a display by the television receiver device when a teletext signal indicating World Clock is received as a multi-subpage. In order for a teletext signal to provide the TIME TEXT function, which is one of the functions of teletext, a subpage number extracted from the teletext signal is a combination of numerals indicating hours and numerals indicating minutes. For example, in the case of 14:20, a subpage number is 1420. This teletext signal page displays time information of countries in the world. Therefore, the automatic-update displaying method is preferable for such a page. However, for a teletext signal indicating a time on or after 00:00, the subpage number takes a value, such as 01, 02 or the like. Therefore, such a teletext signal is displayed in a displaying method different from automatic updating in the case of conventional teletext decoders. In the television receiver devices of the above-described embodiments, a displaying method can be registered for each page. Therefore, when automatic updating is registered for pages indicating times on and after 00: 00, teletext data of World Clock can be appropriately displayed in any event.

FIG. **23** is a diagram for describing a display by the television receiver device when contents of NEWSFLASH are received as a multi-subpage. In this case, either the automatic-update displaying method or the manual displaying method may be used, and the displaying methods may be desirably switched, depending on the user's preference. However, in conventional teletext decoders, display is performed by automatic updating. In the television receiver devices of the above-described embodiments, a displaying method can be registered for each page. Therefore, by registering displaying methods, depending on the user's preference, teletext data can be displayed by a desired displaying method.

### (Other Embodiments)

Although the memories, such as the displaying method memory **133** and the like, are each formed of an external RAM in Embodiments 1 to 5, they may each be formed of a built-in RAM included in an integrated circuit including a corresponding one of the teletext data processing parts **120** to **520.** The type of the memory is not limited to RAM.

Also, although the teletext data processing sections **120** to **520** are each formed of a one-chip integrated circuit in Embodiments 1 to 5, they may each be formed of a plurality of integrated circuit chips.

Although the television receiver devices have been described in Embodiments 1 to 5, the teletext decoding devices of Embodiments 1 to 5 may each be included in a video device, such as a video tape recorder, a hard disk video recorder, a DVD video recorder or the like, or a personal computer.

Also, data (displaying method information) stored in the displaying method memory **133** is not limited to data in the form shown in FIG. **4****,** and may be data in other forms indicating a correspondence relationship between a page attribute (e.g., a page number, etc.) and a displaying method.

Also, data stored in the extraction conditions memory **431** is not limited to data in the form shown in FIG. **16****,** and may be data in other forms indicating extraction conditions. In the latter case, the multi-subpage comparing/extracting part **421** may be adapted to extract a multi-subpage satisfying the extraction conditions, and add information about the extracted multi-subpage to the multi-subpage displaying method table.

The present invention has the effect of displaying on a display device a teletext image of a page having multiple subpages that have the same page number and different contents by an appropriate displaying method desired by the device user, thereby making it possible to prevent inappropriate display. The present invention is useful as, for example, a teletext decoding device for decoding teletext data of a page having multiple subpages, and displaying the teletext image on a display device by multiple subpage displaying methods, or a television receiver device, a video tape recorder, a personal computer or the like that have the teletext decoding device.

## Claims

1. A teletext decoding device for decoding teletext data and displaying a teletext image on a display device, comprising:
a displaying method memory for storing displaying method information indicating a correspondence relationship between a page attribute and a subpage displaying method with respect to a page having multiple subpages; and
a teletext data processing part for decoding teletext data of each page, identifying a subpage displaying method corresponding to the attribute of the page with reference to the displaying method information stored in the displaying method memory, and causing the display device to display a teletext image of the page using said subpage displaying method.

2. The teletext decoding device of claim 1, wherein
the teletext data processing part further has a function of causing the display device to display the displaying method information stored in the displaying method memory, and changing the displaying method information in accordance with a user's input.

3. The teletext decoding device of claim 2, wherein
the teletext data processing part includes a multi-subpage extracting part for extracting a page having multiple subpages from the teletext data, and determining a subpage displaying method for the detected page, and
a correspondence relationship between an attribute and a subpage displaying method of the page detected by the multi-subpage extracting part is added to the displaying method information in the displaying method memory.

4. The teletext decoding device of claim 3, wherein
the attribute of the page includes station information and a page number for identifying the page.

5. The teletext decoding device of claim 3, further comprising:
an extraction conditions memory for storing extraction conditions,
wherein the teletext data processing part further includes a multi-subpage comparing/extracting part for extracting, from the page detected by the multi-subpage extracting part, a page satisfying the extraction conditions stored in the extraction conditions memory, and
a correspondence relationship between an attribute and a subpage displaying method of the page extracted by the multi-subpage comparing/extracting part is added to the displaying method information in the displaying method memory.

6. The teletext decoding device of claim 5, wherein
the attribute of the page includes station information,
the multi-subpage extracting part extracts station information from the teletext data, and stores, into a station information memory for storing station selection information indicating an internal number, an RF channel, and the station information in association with each other, information in which predetermined data is associated as an internal number and an RF channel with the extracted station information, and
the teletext data processing part, when displaying the displaying method information, displays the station selection information which is stored in the station information memory, and displays the subpage displaying method of a page corresponding to station information designated by a user.

7. The teletext decoding device of claim 1, wherein
the teletext data processing part is formed of an integrated circuit, and
the displaying method memory is formed of an external RAM provided outside the integrated circuit or a built-in RAM provided inside the integrated circuit.

8. A television receiver device comprising the teletext decoding device of claim 1.

9. A video device comprising the teletext decoding device of claim 1.

10. A personal computer comprising the teletext decoding device of claim 1.

11. An integrated circuit that decodes teletext data of each page, identifying a subpage displaying method corresponding to the attribute of the page with reference to displaying method information stored in a memory, and causing a display device to display a teletext image of the page using said subpage displaying method.
